# EUROPEAN PATENT SPECIFICATION

(11) **EP 4 366 453 B1**
(45) Date of publication and mention of the grant of the patent: **18.06.2025**
(21) Application number: 23201345.8
(22) Date of filing: 03.10.2023
(51) Int. Cl.: H04W 76/27, H04L 45/16, H04W 28/24, H04W 28/02, H04W 28/08

(54) **METHOD TO USE QUALITY OF SERVICE TO CONTROL MULTICAST RECEPTION OF USER EQUIPMENT IN RRC INACTIVE STATE**
VERFAHREN ZUR VERWENDUNG DER DIENSTGÜTE ZUR STEUERUNG DES MULTICAST-EMPFANGS EINES BENUTZERGERÄTS IM RRC-INAKTIVZUSTAND
PROCÉDÉ D'UTILISATION DE QUALITÉ DE SERVICE POUR COMMANDER LA RÉCEPTION MULTIDIFFUSION D'UN ÉQUIPEMENT UTILISATEUR DANS UN ÉTAT INACTIF RRC

(30) Priority: 04.11.2022 IN 202241063026
(43) Date of publication of application: 08.05.2024
(73) Proprietor: Nokia Technologies Oy, 02610 Espoo (FI)
(72) Inventor: PANIGRAHI, Bighnaraj, Bangalore (IN); ELMALI, Ugur Baran, Munich (DE); MALKAMÄKI, Esa Mikael, Espoo (FI); NATARAJAN, Rajesh Babu, Bangalore (IN); GODIN, Philippe, Versailles (FR)
(74) Representative: Laine IP Oy

(56) References cited:
- WO-A1-2022/084537
- WO-A1-2022/098142
- WO-A1-2022/149489

## Description

### RELATED APPLICATION:

This application claims priority to IN Application No. 202241063026 filed November 4, 2022.

### TECHNICAL FIELD:

Some example embodiments may generally relate to mobile or wireless telecommunication systems, such as 3^{rd} Generation Partnership Project (3GPP) Long Term Evolution (LTE), 5^{th} generation (5G) radio access technology (RAT), new radio (NR) access technology, 6^{th} generation (6G), and/or other communications systems. For example, certain example embodiments may relate to systems and/or methods for using quality of service to control multicast reception of user equipment.

### BACKGROUND:

Examples of mobile or wireless telecommunication systems may include radio frequency (RF) 5G RAT, the Universal Mobile Telecommunications System (UMTS) Terrestrial Radio Access Network (UTRAN), LTE Evolved UTRAN (E-UTRAN), LTE-Advanced (LTE-A), LTE-A Pro, NR access technology, and/or MulteFire Alliance. 5G wireless systems refer to the next generation (NG) of radio systems and network architecture. A 5G system is typically built on a 5G NR, but a 5G (or NG) network may also be built on E-UTRA radio. It is expected that NR can support service categories such as enhanced mobile broadband (eMBB), ultra-reliable low-latency-communication (URLLC), and massive machine-type communication (mMTC). NR is expected to deliver extreme broadband, ultra-robust, low-latency connectivity, and massive networking to support the Internet of Things (IoT). The next generation radio access network (NG-RAN) represents the radio access network (RAN) for 5G, which may provide radio access for NR, LTE, and LTE-A. It is noted that the nodes in 5G providing radio access functionality to a user equipment (e.g., similar to the Node B in UTRAN or the Evolved Node B (eNB) in LTE) may be referred to as next-generation Node B (gNB) when built on NR radio, and may be referred to as next-generation eNB (NG-eNB) when built on E-UTRA radio. Publication WO 2022/084537 A1 describes method performed by a network node in a telecommunication network providing a multicast transmission to a group of devices residing in a cell of the telecommunication network. Publication WO 2022/084537 A1 relates to methods and systems for RRC state maintenance for receiving multicast and broadcast services. Publication WO 2022/149489 A1 describes a communication control method implemented by user equipment in a mobile communication system providing a multicast/broadcast service (MBS).

### SUMMARY:

The invention is defined in the appended apparatus claims 1 and 6, and corresponding method claims 14 and 15. Specific embodiments are defined in the dependent claims.

### BRIEF DESCRIPTION OF THE DRAWINGS:

For a proper understanding of example embodiments, reference should be made to the accompanying drawings, wherein:
FIG. 1 illustrates an example of a flow diagram of a small data transmission (SDT) configuration;
FIG. 2 illustrates an example of a signaling diagram of small data transmission via a 2-step random access channel (RACH) procedure;
FIG. 3 illustrates an example of a signaling diagram for measuring quality of service thresholds by a user equipment;
FIG. 4 illustrates an example of a signaling diagram for defining one or multiple multicast and broadcast services (MBS) sessions, and optionally multiple threshold levels according to certain example embodiments;
FIG. 5 illustrates an example of a signaling diagram for defining one or multiple MBS sessions, and optionally multiple threshold levels mapped with applicable time windows according to certain example embodiments;
FIG. 6 illustrates an example of a signaling diagram for defining one or multiple MBS sessions, and optionally one or more conditional quality of service (QoS) parameter sets, and applicable time windows according to certain example embodiments;
FIG. 7 illustrates an example of a signaling diagram for using SDT by RRC_INACTIVE UEs to give QoS information to a gNB according to certain example embodiments;
FIG. 8 illustrates an example of a flow diagram of a method that may be performed by a UE according to certain example embodiments;
FIG. 9 illustrates an example of a flow diagram of a method that may be performed by a gNB according to some example embodiments;
FIG. 10 illustrates an example of a flow diagram of a method that may be performed by a UE according to various example embodiments;
FIG. 11 illustrates an example of a flow diagram of a method that may be performed by a gNB according to certain example embodiments;
FIG. 12 illustrates an example of a flow diagram of a method that may be performed by a UE according to some example embodiments;
FIG. 13 illustrates an example of a flow diagram of a method that may be performed by a gNB according to various example embodiments;
FIG. 14 illustrates an example of a flow diagram of a method that may be performed by a UE according to certain example embodiments;
FIG. 15 illustrates an example of a flow diagram of a method that may be performed by a gNB according to some example embodiments;
FIG. 16 illustrates an example of various network devices according to various example embodiments; and
FIG. 17 illustrates an example of a 5G network and system architecture according to certain example embodiments.

### DETAILED DESCRIPTION:

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for using QoS to control multicast reception of UE is not intended to limit the scope of certain example embodiments, but is instead representative of selected example embodiments.

In 3GPP Release (Rel)-17, NR MBS may be allowed for UE to only receive multicast while in RRC_CONNECTED state. Point-to-multipoint (PTM) transmissions may efficiently provision MBS services to multiple users by using the same radio framework as unicast transmissions. 3GPP Rel-17 enabled reception of a multicast service by the UEs only in RRC_CONNECTED state, which may improve reliability of data reception via hybrid automatic repeat request (HARQ) retransmissions and dynamic modulation and coding scheme (MCS) selection, even for PTM operations.

3GPP Rel-18 identified and evaluated further enhancements to the 5GS architecture to provide MBS. In particular, reception of multicast services by the UE may be enabled in an RRC_INACTIVE state for scalability and power saving purposes. When a UE is in an RRC_INACTIVE state, it may apply the configuration of the multicast service in the cell to start/continue receiving a multicast service that the UE has joined.

One option is to provide the configuration using a method similar to the 3GPP Rel-17 broadcast (*i.e.,* cell broadcasts system information block (SIB)/multicast control channel (MCCH) periodically, enabling RRC_INACTIVE UEs to receive the configuration and related updates). Alternatively, the UE may receive the configuration of multicast reception for all cells in the RAN notification area (RNA) while transitioning to an RRC_INACTIVE state. SIB/MCCH may then provide further information in the cells on the current state of multicast services. In addition, it may be possible that the UE receives some of the configuration via dedicated signaling, while some other portion may be signaled via SIB/MCCH (*i*.*e*., mixed mode of configuration). In addition, UEs in RRC_CONNECTED and RRC_INACTIVE states may simultaneously receive the same multicast data (*e.g.,* physical downlink shared channel (PDSCH)) and physical downlink control channel (PDCCH) that schedules the data.

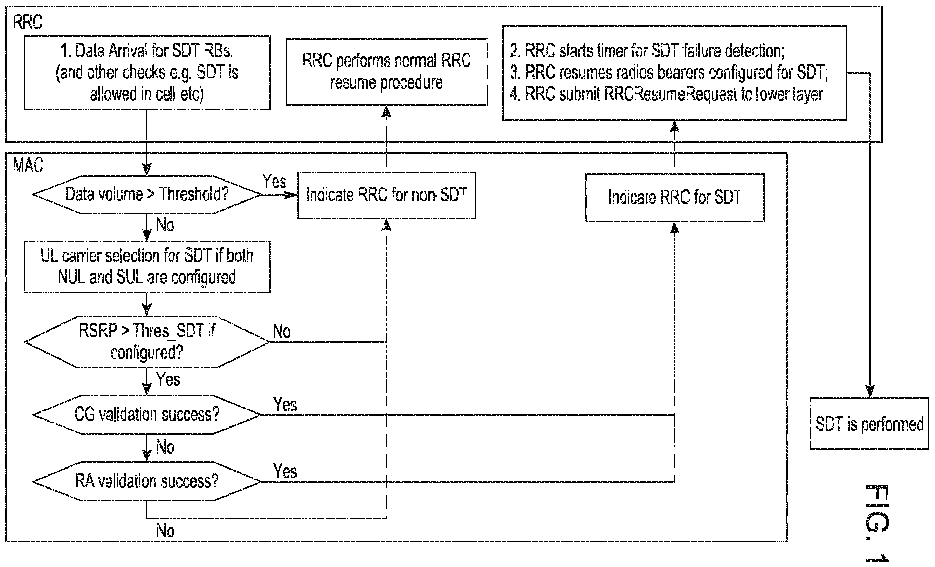

Small data transmission (SDT) relates to allowing the UE to receive and transmit data while in an RRC_INACTIVE state (*i.e.,* without transitioning to RRC_CONNECTED state). SDT may be enabled on a radio bearer basis and may be initiated by the UE based only on configured thresholds (*e*.*g*., if less than a configured amount of uplink (UL) data awaits transmission across all radio bearers for which SDT is enabled, or the downlink (DL) reference signal received power (RSRP) is above a configured threshold, such as shown in the flowchart of FIG. 1 of an SDT configuration).

SDT procedures may be initiated with either a transmission over RACH (*e.g.,* configured via system information) or over Type 1 configured grant (CG) resources (*e.g.,* configured via dedicated signaling in *RRCRelease).*

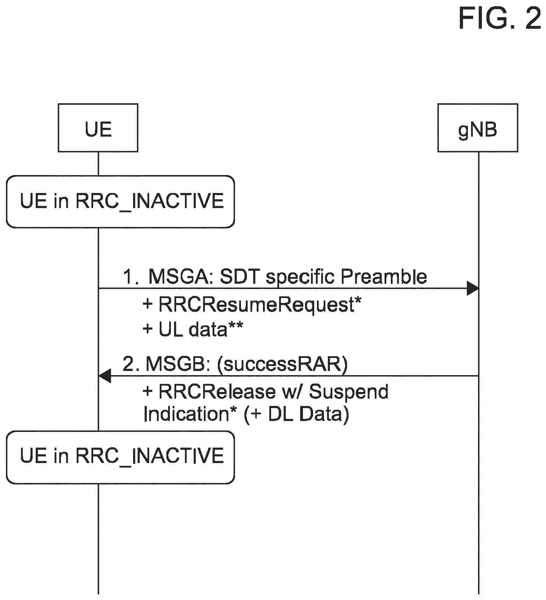

FIG. 2 depicts an example of a 2-step RACH-based SDT, wherein the selection of a physical random access channel (PRACH) preamble dedicated for SDT and/or selection of SDT-specific RACH occasion may indicate a need for an SDT transmission to the network. Although SDT-specific RACH resources (*e*.*g*., RACH occasion (RO) + preamble combination) may be assumed, use of common RACH resources may not be precluded if possible via implementation (*e*.*g*., not supported by explicit mechanism). MSG3/MSGA size may be such that the UE may multiplex the UL data in the medium access control (MAC) protocol data unit (PDU) with the radio resource control (RRC) resume request message to provide necessary control information.

3GPP groups have agreed that HARQ feedback and point-to-point (PTP) retransmissions are not supported for multicast reception in RRC_INACTIVE state. Due to a lack of feedback UL communication in RRC_INACTIVE state (*e.g.,* no UL communication while the UE is in RRC_INACTIVE to send UL HARQ feedback), the network may be unable to monitor, and thus improve MBS service delivery for UEs in RRC_INACTIVE state, unlike UEs in RRC_CONNECTED state. Thus, if there are UEs receiving the same service in RRC_INACTIVE and RRC_CONNECTED states, the gNB may only perform link adaptation based on the feedback of the UEs in RRC_CONNECTED. If there are only UEs in RRC_INACTIVE state, the network may not perform link adaptation for that multicast service.

As a result, MBS reception quality of certain UEs that are in RRC_INACTIVE state may be significantly below the QoS level for the multicast session required as per received QoS flows/QoS parameters. If the gNB decides to keep a portion of the total MBS UEs in RRC_CONNECTED state, and send another portion of UEs in RRC_INACTIVE state (*e.g.,* due to congestion). Reliability of UEs in RRC_INACTIVE may be improved via network implementation (*e*.*g*., repetition); however, this may conflict with the purpose of MBS (*i*.*e*., resource optimization).

In order to manage the QoS of the UE in RRC_INACTIVE state, some proposals suggest to configure the UE via dedicated signaling with a QoS threshold for the RRC_INACTIVE UEs, and whenever the UE experiences a QoS less than the defined threshold value, the UE may return to an RRC_CONNECTED state. However, in high-congestion scenarios, it may be difficult for the gNB to accommodate all the RRC_INACTIVE UEs into RRC_CONNECTED states at the same time when several UEs attempt to reconnect. It is noted that enabling RRC_INACTIVE multicast reception can target scalability, with many UEs receiving the same multicast service. In addition, RACH congestion may occur in some situations. However, the gNB currently cannot dynamically control such behavior of the UE.

In light of the discussion above, there are several disadvantages with current techniques. For example, there may be a lack of dynamic network control, where UEs may resume to RRC_CONNECTED, while the network remains congested. RRC_INACTIVE reception provides scalability, and therefore, many UEs may be in the same cell receiving multicast in RRC_INACTIVE state. Furthermore, there may be inefficiency with power consumption and resource utilization due to the UE continuously trying to return to an RRC_CONNECTED state, although the network would reject a connection from the UE.

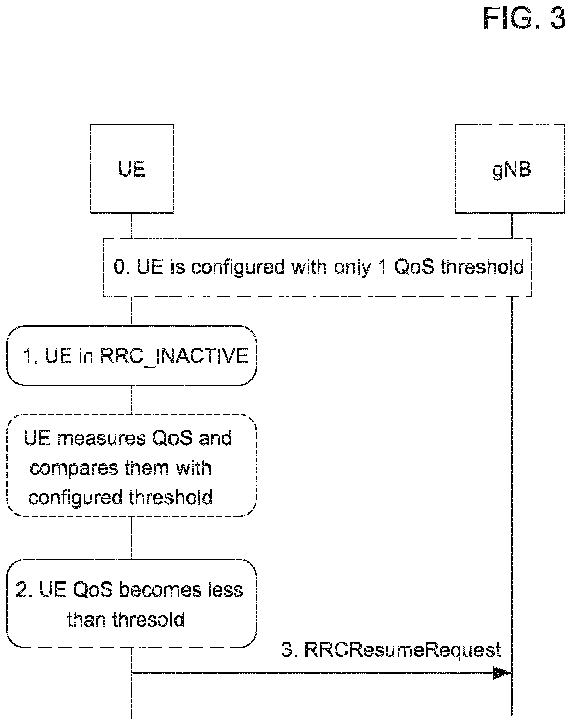

An example technique is depicted in FIG. 3. The UE may send a measurement report to the gNB only in an RRC_CONNECTED state. For example, the UE may be configured such that if the UE experiences a measured QoS below a predefined threshold level, the UE may transition to RRC_CONNECTED state using *RRCResumeRequest* procedure. The UE may autonomously decide when to switch to RRC_CONNECTED state, without control by the gNB. In addition, each UE experiencing degraded service/QoS may return to RRC_CONNECTED to notify the gNB. The RRC_INACTIVE UE may be configured with a single QoS threshold, and whenever the QoS of an RRC_INACTIVE UE falls below the threshold level, the UE automatically and autonomously transitions to RRC_CONNECTED state and notifies the gNB.

Certain example embodiments described herein may have various benefits and/or advantages to overcome the disadvantages described above. For example, certain example embodiments may provide the gNB with more dynamically controllable QoS thresholds, particularly controlled based on congestion and/or scalability conditions. This may maximize the QoS experienced by UEs when receiving MBS sessions in RRC_INACTIVE at any point in time, and ensuring that scalability requirements are met at any point in time, while considering scalability requirements in light of QoS requirements. In addition, this may enable UEs receiving MBS in RRC_INACTIVE state to improve their QoS by sending feedback to the network. Thus, certain example embodiments discussed below are directed to improvements in computer-related technology.

Certain example embodiments described herein relate to techniques to control QoS that can support i) the gNB to dynamically control the RRC_INACTIVE UEs in the cell more efficiently, and ii) improve synchronization between RRC_INACTIVE UEs and the gNB during degraded QoS. This may accomplished by an RRC_INACTIVE UE i) measuring and monitoring the quality of the MBS data reception, and ii) notifying the gNB when QoS degrades below a threshold level. The network may then determine to transition the UE to RRC_CONNECTED for an improved MBS reception (e.g., via PTP + PTM). Some example embodiments may incorporate the use of multicast channel (MCH) block error rate (BLER) monitoring, service data adaption protocol (SDAP), layer 1 (L1)/layer 3 (L3) measurements, and quality of experience (QoE) measurement collection methods. Some example embodiments may improve synchronization between RRC_INACTIVE UEs and the gNB during degraded QoS; specifically, when the UE measures and monitors the reception quality, observes that there is degradation in the QoS, and indicates the degradation to the gNB.

In various example embodiments, a NE may transmit more than one QoS threshold configuration, each comprising at least one QoS threshold, wherein each of the QOS threshold configurations are associated with a QoS threshold configuration identifier.

In certain example embodiments, a NE may select a first QoS threshold configuration from among more than one QoS threshold configuration, and transmit, to a UE, the QoS threshold configuration identifier associated with the first QoS threshold configuration via broadcast SIB or MCCH.

In some example embodiments, the transmitting may include transmitting at least one of the QoS thresholds.

In various example embodiments, each QoS threshold configuration may include at least one QoS parameters set, and each QoS parameters set may include more than one QoS parameter.

In certain example embodiments, the NE may select a time window where at least one of the QoS threshold configurations is applicable, and transmit the selected time window to the UE.

In some example embodiments, the NE may set a priority value for each of the QoS threshold configuration identifiers, select a QoS threshold configuration identifier, and transmit the priority value corresponding with the selected QoS threshold configuration identifier via SIB or MCCH.

In various example embodiments, the NE may transmit, to the user equipment, a priority value associated with each quality of service threshold configuration identifier, and broadcast, to the user equipment, a priority threshold.

In some example embodiments, the NE may receive, from the UE, a QoS degradation status using uplink SDT.

In certain example embodiments, a UE may receive, from a network entity, more than one QoS threshold configuration each comprising at least one QOS threshold, wherein each of the QoS threshold configurations are associated with a QoS threshold configuration identifier; receive, from the network entity, one of the QoS threshold configuration identifiers; measure a QoS for each of the QoS thresholds of the QoS threshold configuration associated with the received QoS threshold configuration identifier; and determine a RRC state based upon a comparison of the measured QoS being above or below a respective QoS threshold of each of the QoS thresholds of the QoS threshold configuration associated with the received QoS threshold configuration identifier.

In some example embodiments, each QoS threshold configuration may include at least one QoS parameters set, and each QoS parameters set may include more than one QoS parameter.

In various example embodiments, the UE may determine that the measured QoS is above the QoS threshold level for at least one of the QoS thresholds in the identified QoS threshold configuration; and remain in a RRC inactive state.

In certain example embodiments, the UE may determine that at least one of the measured QoSs are below the QoS threshold level of the QoS thresholds in the identified QoS threshold configuration, and send a request to transition to a RRC connected state.

In some example embodiments, the UE may determine that the measured QoS is below the QoS threshold level for at least one of the QoS thresholds in the identified QoS threshold configuration, and remain in a RRC inactive state.

In various example embodiments, the UE may determine that at least one of the measured QoSs is above the QoS threshold level of the QoS thresholds in the identified QoS threshold configuration, and send a request to transition to a RRC connected state.

In certain example embodiments, the UE may determine that the measured QoS equals the QoS threshold level for at least one of the QoS thresholds comprised in the identified QoS threshold configuration, and send a request to transition to a RRC connected state.

In some example embodiments, the UE may determine that the measured QoS equals the QoS threshold level for at least one of the QoS thresholds comprised in the identified QoS threshold configuration, and remain in a RRC inactive state.

In various example embodiments, the QoS threshold configuration identifier may be received via broadcast SIB or MCCH.

In certain example embodiments, the UE may receive, from a network entity, a time window associated with the at least one of the QoS threshold configurations; determine if current time matches the received time window; and determine whether to measure when the current time matches the received time window.

In some example embodiments, the UE may receive, from the network entity, a priority value corresponding with a selected QoS threshold configuration identifier via SIB or MCCH, and determine whether to measure a QoS associated with a corresponding QoS threshold configuration when the priority threshold received for the QoS threshold configuration is above the received priority value.

In various example embodiments, the UE receive, from the network entity, a priority value associated with each QoS threshold configuration identifier, and receive, from the network entity, a priority threshold via broadcast.

In certain example embodiments, the priority value may be received over a broadcast channel.

In some example embodiments, the UE may transmit, to the network entity, a QoS degradation status using an uplink SDT procedure.

In various example embodiments, the UE may receive, from the network entity, a priority value associated with each QoS threshold configuration identifier, receive, from the network entity, a priority threshold via broadcast, and apply the QoS threshold configuration associated with the priority value that is above the priority threshold.

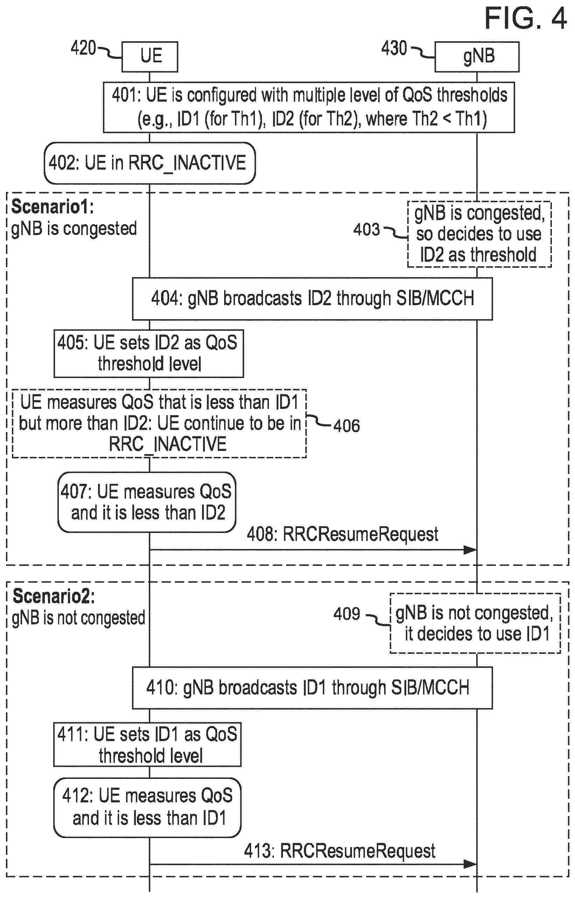

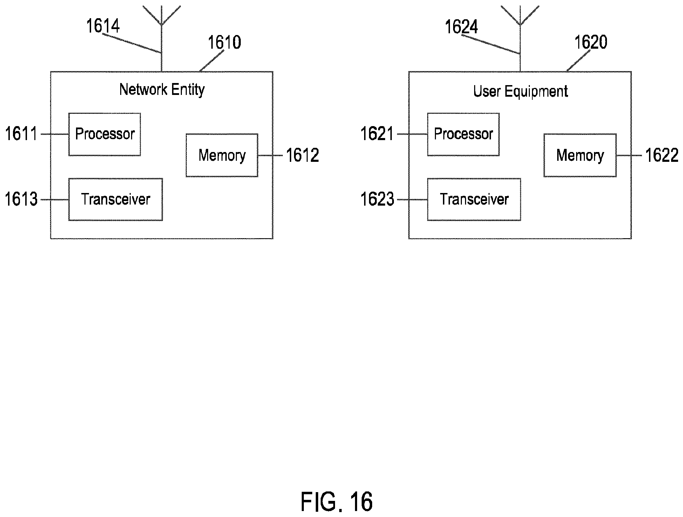

FIG. 4 illustrates an example of a signaling diagram for defining one or multiple MBS sessions, and multiple threshold levels, for a QoS parameter and applicable time windows. NE 430 and UE 420 may be similar to NE 1610 and UE 1620, as illustrated in FIG. 16, according to certain example embodiments.

In general, one QoS threshold level may be defined for RRC_INACTIVE UEs, such as UE 420. Thus, whenever UE 420 experiences QoS less than a threshold level, UE 420 may switch to RRC_CONNECTED state. Multiple QoS threshold values are defined/configured by NE 430 for UEs receiving in RRC_INACTIVE state.

At 401, NE 430 may configure UE 420 with multiple levels of QoS thresholds (*i.e.,* ID₁, ID₂, ID₃, ...), for example, Th_high (represented by ID₁) and Th_low (represented by ID₂), where Th_high > Th_low. The QoS thresholds may also set different parameters; for example, Th_high may contain delay and average throughput conditions. At 402, UE 420 may enter, or already be in, an RRC INACTIVE state.

At 403, NE 430 may determine that a high level of network congestion is occurring, and decide to use one of the QoS thresholds (*e.g*., Th_low, ID₂), and allow a limited number of UEs that are experiencing severe QoS degradation to switch to RRC_CONNECTED state. At 404, based upon network conditions (*e.g*., load, congestion), NE 430 may broadcast to all UEs, including UE 420, to use at least one of the threshold values from 401 by broadcasting the ID of the corresponding threshold (*i.e.,* not broadcasting the threshold itself). For example, if NE 430 is experiencing high congestion, NE 430 may notify via broadcast (*e.g*., SIB/MCCH) the RRC_INACTIVE UEs to use Th_low by broadcasting the ID associated with Th_low, such that only a few of the RRC_INACTIVE UEs that are experiencing severe QoS degradation conditions may enable switching to RRC_CONNECTED state.

In certain example embodiments, NE 430 may directly broadcast over MCCH "threshold levels" that UEs (*e.g.,* UE 420) receiving the MBS session in RRC_INACTIVE state should follow, rather than broadcasting the threshold via dedicated signaling. This may occur since UE 420 constantly monitors the threshold levels over MCCH to determine whether they have been fulfilled.

In some example embodiments, NE 430 may configure the UEs (*e.g.,* UE 420) with one or more threshold values on a per cell basis and/or configure each threshold value for one or multiple MBS sessions. If configured for multiple MBS sessions, the threshold level may be applied based upon a priority threshold of the MBS session (*i.e.,* apply the threshold parameter only for MBS sessions of priority higher than 3).

In various example embodiments, NE 430 may broadcast a congestion indicator, such that when the congestion indicator is set to "TRUE," all UEs which have been configured with threshold levels apply them, as described above. However, when the congestion indicator is set to 'FALSE,' or not broadcasted, the threshold level parameters may not be used by UE 420.

At 405, UE 420 may set ID₂ as the QoS threshold level. At 406, UE 420 may measure that QoS is less than ID₁ but more than ID₂. As a result, UE 420 may remain in RRC_INACTIVE state. At 407, UE 420 may measure QoS again, and determine that QoS is less than ID₂. At 408, UE 420 may transmit to NE 430 an *RRCResumeRequest.*

At 409, NE 430 may determine that network congestion occurring has fallen below a certain lower level, and decide to use a less-stringent QoS thresholds (*e.g*., Th_high, ID₁). At 410, based upon network conditions (*e.g*., load, congestion), NE 430 may broadcast to all UEs, including UE 420, to use the less-stringent threshold value by broadcasting the ID of the threshold. This may enable more UEs to resume RRC_CONNECTED state.

At 411, UE 420 may set ID₁ as the QoS threshold level. At 412, UE 420 may measure that QoS is less than ID₁. At 413, UE 420 may transmit to NE 430 an *RRCResumeRequest.*

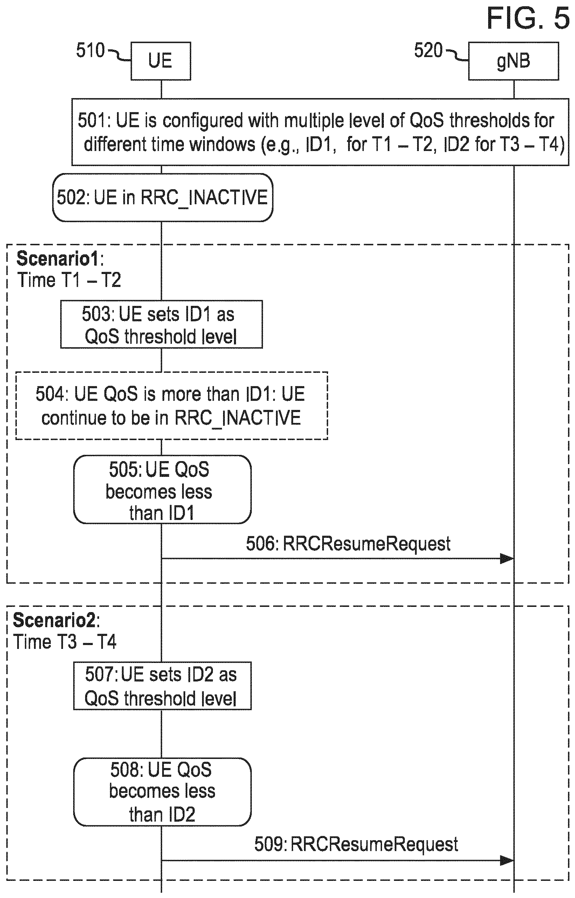

FIG. 5 illustrates an example of a signaling diagram for defining one or multiple MBS sessions, and multiple threshold levels, for a QoS parameter and applicable time windows. NE 520 and UE 510 may be similar to NE 1610 and UE 1620, as illustrated in FIG. 16, according to certain example embodiments. Multiple QoS threshold values are defined/configured by NE 520 for UEs receiving in RRC_INACTIVE state. Based on the time period, UE 510 may apply the appropriate threshold values; thus, there is no need for NE 520 to broadcast new thresholds each time there is a change in congestion levels. FIG. 5 is a variation of the embodiments described in FIG. 4, wherein multiple levels of QoS thresholds and time windows may be defined.

At 501, NE 520 may configure UE 510 with multiple levels of QoS thresholds for different time windows (*e.g*., ID₁ for threshold 1 and time window T₁ - T₂; ID₂ for threshold 2 and time window T₃ - T₄). At 502, UE 510 may transition to, or already be in, an RRC_INACTIVE state.

In various example embodiments, NE 520 may predict different congestion levels (*e.g.,* high: radio congestion level is above 90%; moderate: radio congestion level is 80-90%; low: radio congestion level is below 80%) at different peak hours (*e.g.,* T₁, T₂, T₃, ...). Based on internal algorithms, NE 520 may be configured to predict different congestion levels at different time periods, and accordingly, derive the optimized QoS threshold levels, which is configured at UE 510. The predictions may be derived statistically and/or obtained from a self-organizing network (SON)/automation/AI/ML network functions/modules that are available (*e.g*., network data analytics function (NWDAF)). Similarly, NE 520 may derive non-peak hours and/or optimized threshold levels application within various time windows. By configuring UE 510 with these values, NE 520 does not need to broadcast new thresholds during peak/non-peak hours, and UE 510 may apply the configured thresholds during the time window.

An example of peak hours could include thresholds such as Tₚₕ (high peak hour threshold) = T₁ (9AM) - T₂ (10AM), T₅ (6PM) - T₆ (8PM); Tₚₘ (moderate peak hour threshold) = T₃ (8PM) - T₄ (9PM), T₇ (8PM) - T₈ (9PM); and Tₚₗ (low peak hour threshold) = T₉ (9PM) - T₁₀ (10PM).

Similarly, an example of non-peak hours could include thresholds such as Tₙₚₕ (high non-peak hour threshold) = T₁₁ (12AM) - T₁₂ (8AM), T₁₃ (10AM) - T₁₄ (6PM); and Tₙₚₗ (low non-peak hour threshold) = T₁₅(10PM) - T₁₆(12AM).

At 503, UE 510 may set ID₁ as a QoS threshold level with a specified time window.

At 504, when the time is between T₁-T₂, UE 510 may monitor that QoS is more than ID₁. Thus, UE 510 may remain in RRC_INACTIVE state.

At 505, UE 510 may determine that QoS has fallen below ID₁.

At 506, UE 510 may transmit to NE 520 an *RRCResumeRequest.*

At 507, UE 510 may set ID₂ (*e*.*g*., threshold level 2 in time T₃ - T₄) as the QoS threshold level.

At 508, UE 510 may determine that QoS has fallen below ID₂.

At 509, UE 510 may transmit to NE 520 an *RRCResumeRequest.*

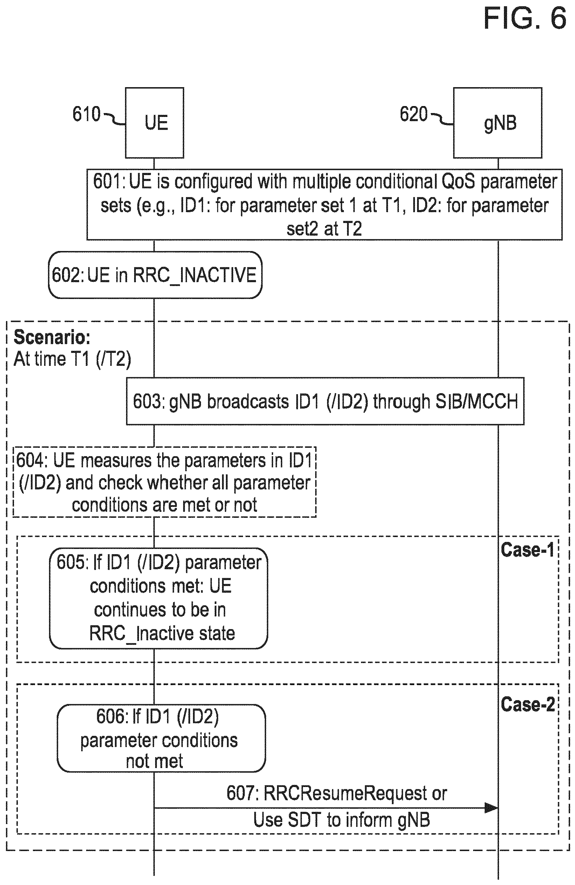

FIG. 6 illustrates an example of a signaling diagram for defining one or multiple MBS sessions, and optionally one or more conditional QoS parameter sets, and applicable time windows. NE 620 and UE 610 may be similar to NE 1610 and UE 1620, as illustrated in FIG. 16, according to certain example embodiments. FIG. 6 is a variation of the embodiments described in FIGs. 4 and 5.

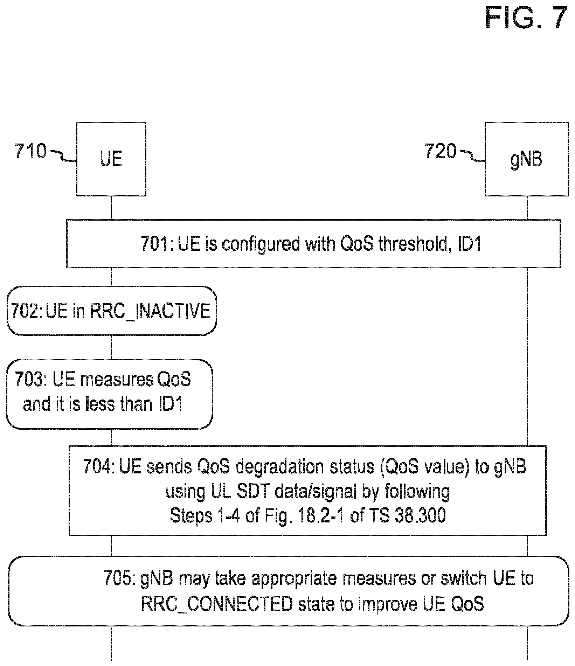

At 601, NE 620 may configure UE 610 with one or more conditional QoS parameter sets, wherein each QoS parameter set may be associated with an ID (*e.g.,* parameter set 1 with ID₁ should be used at time window T₁ (if applied); parameter set 2 with ID₂ should be used at time window T₂). Each conditional QoS parameter set may include a set of QoS parameters, such that if any QoS parameter is not fulfilled, UE 610 may reconnect, as described in FIGs. 4 or 5, and/or send an indication over SDT using the techniques described in FIG. 7 (discussed below). In some other embodiments, UE 610 may reconnect, as described in FIGs. 4 or 5, and/or send an indication over SDT using the techniques described in FIG. 7 (discussed below) only when all the QoS parameters within the QoS parameter set are not fulfilled. At 602, UE 610 may transition to, or already be in, an RRC_INACTIVE state, and be receiving MBS data.

At 603, NE 620 may broadcast over SIB/MCCH which conditional parameter set IDs UE 610 should apply in a given cell at a given point in time. If NE 620 uses a dedicated configuration for RRC_INACTIVE UEs, it may configure ID₁ with the selected time window (if applicable) in UE 610 when UE 610 was in RRC_CONNECTED state.

At 604, UE 610 may measure the parameters in ID₁ and/or ID₂, and check whether all parameter conditions are met. For example, RRC_INACTIVE UE 610 may constantly monitor the conditional QoS parameters sets according to the ID broadcast over MCCH, and possibly the current time to check whether all parameters are fulfilled.

At 605, if UE 610 determines that ID₁ and/or ID₂ parameter conditions are satisfied, UE 610 may remain in RRC_INACTIVE state. If all the parameter conditions are fulfilled, UE 610 may continue to receive the MBS data in RRC_INACTIVE state. Alternatively, if at 606, UE 610 determines that ID₁ and/or ID₂ parameter conditions are not satisfied, at 607, UE 610 may transmit to NE 620 an *RRCResumeRequest,* or use SDT to notify NE 620 of the QoS level/value. If any of QoS conditions are not fulfilled, UE 610 may reconnect as in FIGs. 4 or 5, and/or send an indication over SDT using techniques described in FIG. 7.

In certain example embodiments, NE 620 may directly broadcast over MCCH conditional QoS parameter sets which UE 610 (receiving the MBS session in RRC_INACTIVE state, from 602) should follow. These conditional QoS parameters sets may include a set of QoS parameters, such that if any of them are not fulfilled, UE 610 may reconnect as described in FIG. 4-5, and/or send an indication over SDT the techniques described in FIG. 7. UE 610 may constantly monitor the conditional QoS parameters sets broadcast over MCCH to check whether all parameters are fulfilled.

In various example embodiments, NE 620 may associate a time window with any of the conditional QoS parameter sets. For example, at a given point in time, UE 610 may only consider the conditional QoS parameters sets if the current time falls within the time window. The time window may either be configured in the UE, together with its associated conditional QoS parameter set, or it may be broadcast over MCCH in the cell.

In certain example embodiments, UE 610 may be configured with the one more conditional QoS parameter sets either for one MBS session or applicable for multiple sessions. If configured for more than one MBS session, the applicability of the conditional QoS parameter set may be associated with a priority threshold of the MBS session (e.g., apply the conditional QoS parameter set only for MBS sessions of priority higher than 3).

In some example embodiments, NE 620 may broadcast a congestion indicator such that when the congestion indicator is set to "TRUE," all UEs *(e.g.,* UE 610) which have been configured with any conditional QoS parameter sets apply them as described above. Alternatively, when the congestion indicator is set to 'FALSE,' or not broadcasted, UE 610 may disregard any conditional QoS parameter sets.

FIG. 7 illustrates an example of a signaling diagram for using SDT by RRC_INACTIVE UEs to give QoS information to a gNB. NE 720 and UE 710 may be similar to NE 1610 and UE 1620, as illustrated in FIG. 16, according to certain example embodiments. FIG. 7 is a variation of the embodiments described in FIGs. 4-6. Depending on specific threshold values that UE 710 is monitoring, UE 710 may either remain in RRC_INACTIVE state and use SDT to notify NE 720 of the QoS value and degraded reception quality, or switch to RRC_CONNECTED state. NE 720 and UE 710 may both be configured to support SDT.

At 701, NE 720 may configure UE 710 with a QoS threshold (*e.g.,* ID₁).

At 702, UE 710 may transition into, or already be in, an RRC_INACTIVE state.

At 703, UE 710 may measure QoS, and determine that QoS is less than the QoS threshold (*e.g.,* ID₁).

At 704, UE 710 may transmit to NE 720 a QoS degradation status *(e.g.,* QoS value) using UL SDT data/signal, which may indicate the degrading quality of MBS reception. As an example, UE 710 may follow the SDT set-up procedure with NE 720 using either RACH (configured via system information) or over Type 1 CG resources (configured via dedicated signalling in *RRCRelease).*

At 705, NE 720 may take appropriate measures *(e.g.,* set a more conservative modulation and coding scheme (MCS) or increase the power for the transmission), and/or switch UE 710 to RRC_CONNECTED state to improve UE QoS.

In certain example embodiments, UE 710 may also define multiple threshold levels so that, depending on the threshold value, UE 710 may decide to either send SDT or go to RRC_CONNECTED mode. For example, if the reception quality is below Th_sdt, but above Th_connect, UE 710 may remain in RRC_INACTIVE state, and send QoS information to NE 720 using SDT. If quality/QoS degrades further and reaches below Th_connect, UE 710 may initiate RRC_CONNECTED state using *RRCResumeRequest.*

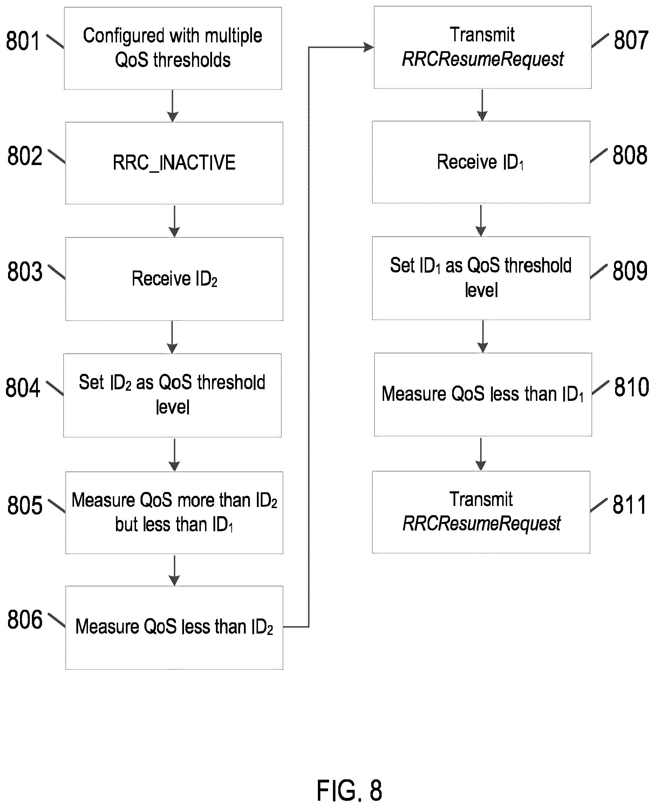

FIG. 8 illustrates an example of a flow diagram for defining one or multiple MBS sessions, and multiple threshold levels, for a QoS parameter and applicable time windows that may be performed by a UE, such as UE 1620 illustrated in FIG. 16, according to various example embodiments.

At 801, the method may include receiving, from the NE, a configuration with multiple levels of QoS thresholds (*i.e.,* ID₁, ID₂, ID₃, ...), for example, Th_high (represented by ID₁) and Th_low (represented by ID₂), where Th_high > Th_low. The QoS thresholds may also set different parameters; for example, Th_high may contain delay and average throughput conditions. At 802, the method may include entering, or already be in, an RRC_INACTIVE state.

At 803, the method may include, based upon network conditions (e.g., load, congestion), receiving a broadcast from the NE to use one of the threshold values by broadcasting the ID of the threshold rather than the threshold itself. For example, if the NE is experiencing high congestion, the NE may notify via broadcast (e.g., via SIB/MCCH) the RRC_INACTIVE UEs to use Th_low by broadcasting the ID associated with Th_low, such that only a few of the RRC_INACTIVE UEs that are experiencing severe QoS degradation conditions may enable switching to RRC_CONNECTED state.

In certain example embodiments, the UE may receive a broadcast over MCCH "threshold levels" that the UE receiving the MBS session in RRC_INACTIVE state should follow, rather than broadcasting the threshold via dedicated signaling. This may occur since the UE may constantly monitor the threshold levels over MCCH to determine whether they have been fulfilled.

In some example embodiments, the UE may be configured with one or more threshold values on a per cell basis and/or configure each threshold value for one or multiple MBS sessions. If configured for multiple MBS sessions, the threshold level may be applied based upon a priority threshold of the MBS session *(i.e.,* apply the threshold parameter only for MBS sessions of priority higher than 3).

In various example embodiments, the method may include receiving a broadcast of a congestion indicator, such that when the congestion indicator is set to "TRUE," all UEs which have been configured with threshold levels apply them, as described above. However, when the congestion indicator is set to 'FALSE,' or not broadcasted, the threshold level parameters are not used by the UE.

At 804, the method may include setting ID₂ as the QoS threshold level. At 805, the method may include measuring that QoS is more than ID₂. As a result, the UE may remain in RRC_INACTIVE state. At 806, the method may include measuring QoS again, and determine that QoS is less than ID₂. At 807, the method may include transmitting to the NE an *RRCResumeRequest.*

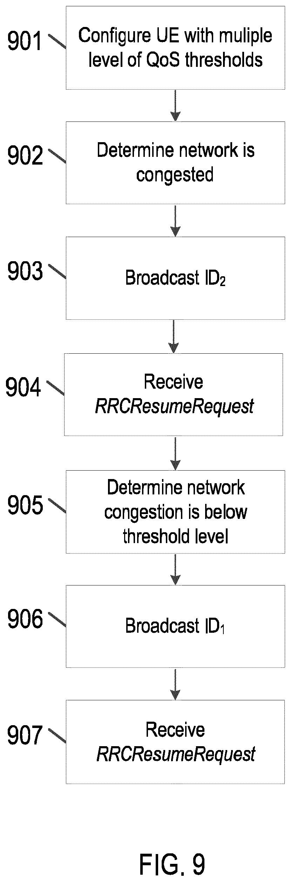

FIG. 9 illustrates an example of a flow diagram of a method for defining one or multiple MBS sessions, and multiple threshold levels, for a QoS parameter and applicable time windows that may be performed by a NE, such as NE 1610 illustrated in FIG. 16, according to various example embodiments.

In general, one QoS threshold level may be defined for RRC_INACTIVE UEs, such as a UE, such as UE 1620 illustrated in FIG. 16. Thus, whenever the UE experiences QoS less than a threshold level, the UE may switch to RRC_CONNECTED state. Multiple QoS threshold values may be defined/configured by the NE for UEs receiving in RRC_INACTIVE state.

At 901, the method may include configuring the UE with multiple levels of QoS thresholds (*i.e.,* ID₁, ID₂, ID₃, ...), for example, Th_high (represented by ID₁) and Th_low (represented by ID₂), where Th_high > Th_low. The QoS thresholds may also set different parameters; for example, Th_high may contain delay and average throughput conditions. At 902, the method may include determining that a high level of network congestion is occurring, and decide to use one of the QoS thresholds (e.g., Th_low, ID₂), and allow a limited number of UEs that are experiencing severe QoS degradation to switch to RRC_CONNECTED state.

At 903, the method may include, based upon network conditions (e.g., load, congestion), broadcasting to all UEs, including the UE, to use one of the threshold values including the ID of the threshold rather than the threshold itself. For example, if the NE is experiencing high congestion, the NE may notify via broadcast (e.g., via SIB/MCCH) the RRC_INACTIVE UEs to use Th_low by broadcasting the ID associated with Th_low, such that only a few of the RRC_INACTIVE UEs that are experiencing severe QoS degradation conditions may enable switching to RRC_CONNECTED state.

In certain example embodiments, the NE may directly broadcast over MCCH "threshold levels" that UEs *(e.g.,* the UE) receiving the MBS session in RRC_INACTIVE state should follow, rather than broadcasting the threshold via dedicated signaling. This may occur since the UE may constantly monitor the threshold levels over MCCH to determine whether they have been fulfilled.

In some example embodiments, the method may include configuring the UEs *(e.g.,* the UE) with one or more threshold values on a per cell basis and/or configure each threshold value for one or multiple MBS sessions. If configured for multiple MBS sessions, the threshold level may be applied based upon a priority threshold of the MBS session *(i.e.,* apply the threshold parameter only for MBS sessions of priority higher than 3).

In various example embodiments, the method may include receiving a congestion indicator, such that when the congestion indicator is set to "TRUE," all UEs which have been configured with threshold levels apply them, as described above. However, when the congestion indicator is set to 'FALSE,' or not broadcasted, the threshold level parameters are not used by the UE.

At 904, the method may include receiving from the UE an *RRCResumeRequest.*

At 905, the method may include determining that network congestion occurring has fallen below a certain lower level, and decide to use another of the less-stringent QoS thresholds (*e*.*g*., Th_high, ID₁).

At 906, based upon network conditions (e.g., load, congestion), the method may include broadcasting to all UEs to use a less-stringent threshold value by broadcasting the ID of the threshold. This may enable more UEs (e.g., severe and less severe) to resume RRC_CONNECTED state.

At 907, the method may include receiving an *RRCResumeRequest.*

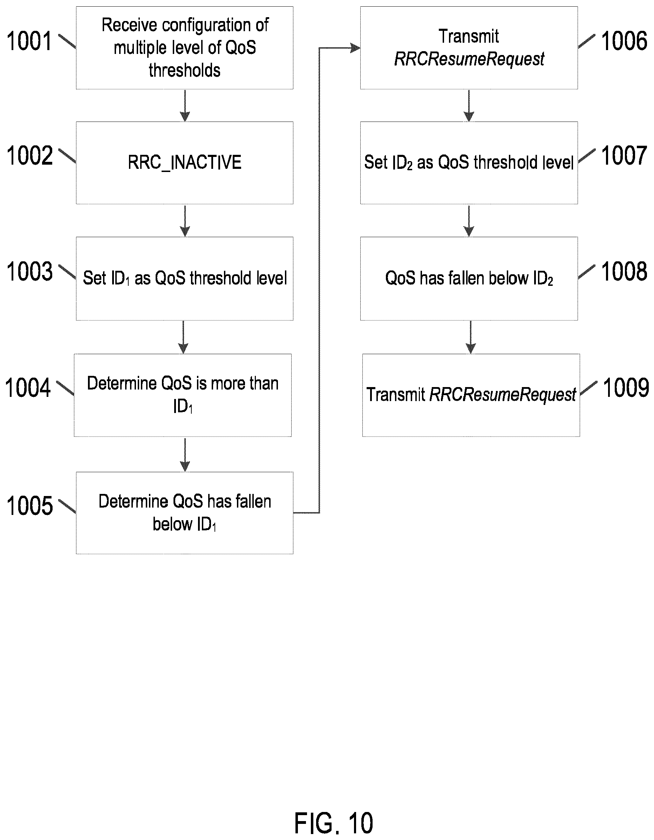

FIG. 10 illustrates an example of a flow diagram of a method for defining one or multiple MBS sessions, and multiple threshold levels, for a QoS parameter and applicable time windows that may be performed by a UE, such as UE 1620 illustrated in FIG. 16, according to various example embodiments. Multiple QoS threshold values may be defined/configured by a NE, such as NE 1610 illustrated in FIG. 16, for UEs receiving in RRC_INACTIVE state. Based on the time period, the UE may apply the appropriate threshold values; thus, there is no need for the NE to broadcast new thresholds each time there is a change in congestion levels.

At 1001, the method may include receiving multiple levels of QoS thresholds for different time windows (e.g., ID₁ for threshold 1 and time window T₁ - T₂; ID₂ for threshold 2 and time window T₃ - T₄). At 1002, the method may include transitioning to, or already being in, an RRC_INACTIVE state.

At 1003, the method may include setting ID₁ as a QoS threshold level with a specified time window.

At 1004, when the time is between T₁-T₂, the method may include monitoring that QoS is more than ID₁. Thus, the UE may remain in RRC_INACTIVE state.

At 1005, the method may include determining that QoS has fallen below ID1.

At 1006, the method may include transmitting to the NE an *RRCResumeRequest.*

At 1007, the method may include setting ID₂ (e.g., threshold level 2 in time T₃ - T₄) as the QoS threshold level.

At 1008, the method may include determining that QoS has fallen below ID₂.

At 1009, the method may include transmitting to the NE an *RRCResumeRequest.*

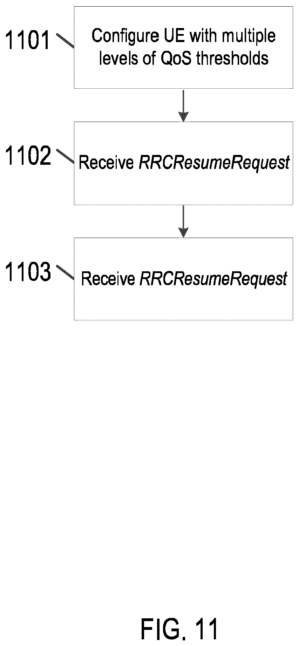

FIG. 11 illustrates an example of a flow diagram of a method that may be performed by a NE, such as NE 1610 illustrated in FIG. 16, according to various example embodiments. Multiple QoS threshold values may be defined/configured by the NE for UEs, such as UE 1620 illustrated in FIG. 16, receiving in RRC_INACTIVE state. Based on the time period, the UE may apply the appropriate threshold values; thus, there is no need for the NE to broadcast new thresholds each time there is a change in congestion levels.

At 1101, the method may include configuring the UE with multiple levels of QoS thresholds for different time windows (e.g., ID₁ for threshold 1 and time window T₁ - T₂; ID₂ for threshold 2 and time window T₃ - T₄).

In various example embodiments, the NE may predict different congestion levels *(e.g.,* high: radio congestion level is above 90%; moderate: radio congestion level is 80-90%; low: radio congestion level is below 80%) at different peak hours (*e.g.,* T₁, T₂, T₃, ...). Based on internal algorithms, the NE may be configured to predict different congestion levels at different time periods, and accordingly, derive the optimized QoS threshold levels, which may be configured at the UE. The predictions may be derived statistically and/or obtained from a SON/automation/AI/ML network functions/modules that are available (e.g., NWDAF). Similarly, the NE may derive non-peak hours and/or optimized threshold levels application within various time windows. By configuring the UE with these values, the NE does not need to broadcast new thresholds during peak/non-peak hours, and the UE may apply the configured thresholds during the time window.

An example of peak hours could include thresholds such as Tₚₕ (high peak hour threshold) = T₁ (9AM) - T₂ (10AM), T₅ (6PM) - T₆ (8PM); Tₚₘ (moderate peak hour threshold) = T₃ (8PM) - T₄ (9PM), T₇ (8PM) - T₈ (9PM); and Tₚₗ (low peak hour threshold) = T₉ (9PM) - T₁₀ (10PM).

Similarly, an example of non-peak hours could include thresholds such as Tₙₚₕ (high non-peak hour threshold) = T₁₁ (12AM) - T₁₂ (8AM), T₁₃ (10AM) - T₁₄ (6PM); and Tₙₚₗ (low non-peak hour threshold) = T₁₅(10PM) - T₁₆(12AM).

At 1102, the method may include receiving from the UE an *RRCResumeRequest.*

At 1103, the method may include receiving an *RRCResumeRequest.*

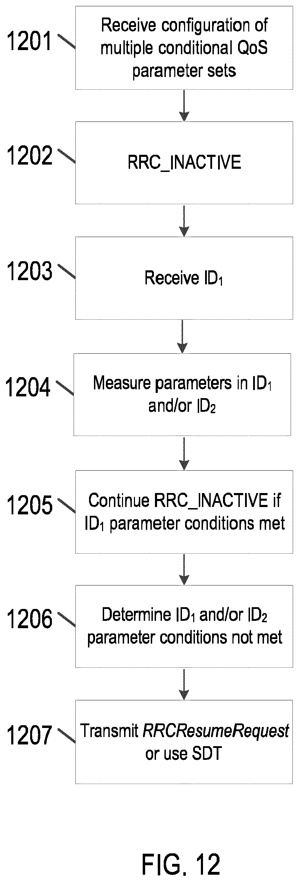

FIG. 12 illustrates an example of a flow diagram of a method for defining one or multiple MBS sessions, and optionally one or more conditional QoS parameter sets, and applicable time windows that may be performed by a UE, such as UE 1620 illustrated in FIG. 16, according to various example embodiments.

At 1201, the method may include receiving, from a NE, such as NE 1610 illustrated in FIG. 16, one or more conditional QoS parameter sets, wherein each QoS parameter set may be associated with an ID (e.g., parameter set 1 with ID₁ should be used at time window T₁ (if applied); parameter set 2 with ID₂ should be used at time window T₂). Each conditional QoS parameter set may include a set of QoS parameters, such that if any QoS parameter is not fulfilled, the method may include reconnecting, as described in FIGs. 4 or 5, and/or send an indication over SDT using the techniques described in FIG. 7 (discussed above). At 1202, the method may include transitioning to, or already be in, an RRC_INACTIVE state, and be receiving MBS data.

At 1203, the method may include receiving over SIB/MCCH which conditional parameter set IDs the UE should apply in a given cell at a given point in time. If the NE uses a dedicated configuration for RRC_INACTIVE UEs, it may configure ID₁ with the selected time window (if applicable) in the UE when the UE was in RRC_CONNECTED state.

At 1204, the method may include measuring the parameters in ID₁ and/or ID₂, and check whether all parameter conditions are met. For example, an RRC_INACTIVE UE may constantly monitor the conditional QoS parameters sets according to the ID broadcast over MCCH, and possibly the current time to check whether all parameters are fulfilled.

At 1205, if the UE determines that ID₁ and/or ID₂ parameter conditions are satisfied, the method may include remaining in RRC_INACTIVE state. If all the parameter conditions are fulfilled, the UE may continue to receive the MBS data in RRC_INACTIVE state. Alternatively, if at 1206 the UE determines that ID₁ and/or ID₂ parameter conditions are not satisfied, at 1207, the method may include transmitting to the NE an *RRCResumeRequest,* or use SDT to notify the NE of the QoS level/value. If any of QoS conditions are not fulfilled, the UE may reconnect as discussed in FIGs. 4 or 5, and/or send an indication over SDT using techniques in FIG. 7.

In certain example embodiments, the method may include receiving over MCCH conditional QoS parameter sets which the UE (receiving the MBS session in RRC_INACTIVE state, from 1202) should follow. These conditional QoS parameters sets may include a set of QoS parameters, such that if any of them are not fulfilled, the UE may reconnect as described in FIG. 4-5, and/or send an indication over SDT the techniques described in FIG. 7. The UE may constantly monitor the conditional QoS parameters sets broadcast over MCCH to check whether all parameters are fulfilled.

In various example embodiments, the NE may associate a time window with any of the conditional QoS parameter sets. For example, at a given point in time, the UE may only consider the conditional QoS parameters sets if the current time falls within the time window. The time window may either be configured in the UE, together with its associated conditional QoS parameter set, or it may be broadcast over MCCH in the cell.

In certain example embodiments, the UE may be configured with the one more conditional QoS parameter sets either for one MBS session or applicable for multiple sessions. If configured for more than one MBS session, the applicability of the conditional QoS parameter set may be associated with a priority threshold of the MBS session (e.g., apply the conditional QoS parameter set only for MBS sessions of priority higher than 3).

In some example embodiments, the NE may broadcast a congestion indicator such that when the congestion indicator is set to "TRUE," all UEs *(e.g.,* the UE) which have been configured with any conditional QoS parameter sets apply them as described above. Alternatively, when the congestion indicator is set to 'FALSE,' or not broadcasted, the UE may disregard any conditional QoS parameter sets.

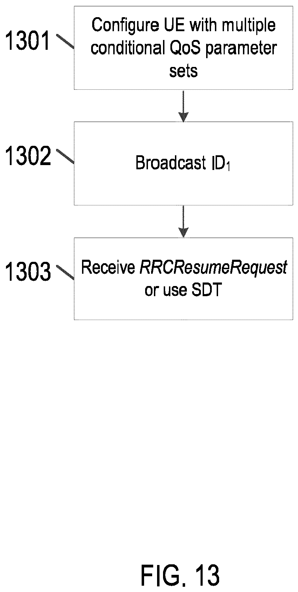

FIG. 13 illustrates an example of a flow diagram of a method for defining one or multiple MBS sessions, and optionally one or more conditional QoS parameter sets, and applicable time windows that may be performed by a NE, such as NE 1610 illustrated in FIG. 16, according to various example embodiments.

At 1301, the method may include configuring a UE, such as UE 1620 illustrated in FIG. 16, with one or more conditional QoS parameter sets, wherein each QoS parameter set may be associated with an ID (e.g., parameter set 1 with ID₁ should be used at time window T₁ (if applied); parameter set 2 with ID₂ should be used at time window T₂). Each conditional QoS parameter set may include a set of QoS parameters, such that if any QoS parameter is not fulfilled, the UE may reconnect, as described in FIGs. 4 or 5, and/or send an indication over SDT using the techniques described in FIG. 7 (discussed below).

At 1302, the method may include broadcasting over SIB/MCCH which conditional parameter set IDs the UE should apply in a given cell at a given point in time. If the NE uses a dedicated configuration for RRC_INACTIVE UEs, it may configure ID₁ with the selected time window (if applicable) in the UE when the UE was in RRC_CONNECTED state.

If the UE determines that ID₁ and/or ID₂ parameter conditions are not satisfied, the method may include, at 1303, receiving an *RRCResumeRequest,* or use SDT to notify the NE.

In certain example embodiments, the NE may directly broadcast over MCCH conditional QoS parameter sets which the UE (receiving the MBS session in RRC_INACTIVE state) should follow. These conditional QoS parameters sets may include a set of QoS parameters, such that if any of them are not fulfilled, the UE may reconnect as described in FIG. 4-5, and/or send an indication over SDT the techniques described in FIG. 7. The UE may constantly monitor the conditional QoS parameters sets broadcast over MCCH to check whether all parameters are fulfilled.

In various example embodiments, the NE may associate a time window with any of the conditional QoS parameter sets. For example, at a given point in time, the UE may only consider the conditional QoS parameters sets if the current time falls within the time window. The time window may either be configured in the UE, together with its associated conditional QoS parameter set, or it may be broadcast over MCCH in the cell.

In certain example embodiments, the UE may be configured with the one more conditional QoS parameter sets either for one MBS session or applicable for multiple sessions. If configured for more than one MBS session, the applicability of the conditional QoS parameter set may be associated with a priority threshold of the MBS session (e.g., apply the conditional QoS parameter set only for MBS sessions of priority higher than 3).

In some example embodiments, the NE may broadcast a congestion indicator such that when the congestion indicator is set to "TRUE," all UEs which have been configured with any conditional QoS parameter sets apply them as described above. Alternatively, when the congestion indicator is set to 'FALSE,' or not broadcasted, the UE may disregard any conditional QoS parameter sets.

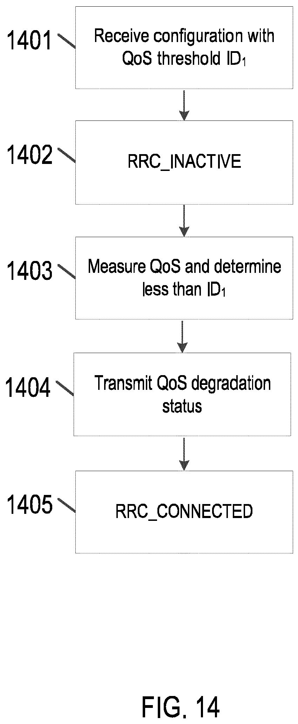

FIG. 14 illustrates an example of a flow diagram of a method for using SDT by RRC_INACTIVE UEs to give QoS information to a gNB that may be performed by a UE, such as UE 1620 illustrated in FIG. 16, according to various example embodiments. Depending on specific threshold values that the UE is monitoring, the UE may either remain in RRC_INACTIVE state and use SDT to notify a NE, such as NE 1610 illustrated in FIG. 16, of the QoS value and degraded reception quality, or switch to CONNECTED mode about degraded reception quality. The UE and NE may both be configured to support SDT.

At 1401, the method may include receiving, from the NE, a QoS threshold *(e.g.,* ID₁) configuration.

At 1402, the method may include transitioning into, or already being in, an RRC_INACTIVE state.

At 1403, the method may include measuring QoS, and determining that QoS is less than the QoS threshold (e.g., ID₁).

At 1404, the method may include transmitting to the NE a QoS degradation status *(e.g.,* QoS value) using UL SDT data/signal, which may indicate the degrading quality of MBS reception. As an example, the UE may follow the SDT set-up procedure with the NE using either RACH (configured via system information) or over Type 1 CG resources (configured via dedicated signalling in *RRCRelease).*

At 1405, the method may include taking appropriate measures (e.g., set a more conservative MCS or increase the power for the transmission), and/or switching the UE to RRC_CONNECTED state to improve UE QoS.

In certain example embodiments, the UE may also define multiple threshold levels so that depending on the threshold value, the UE may decide to either send SDT or go to RRC_CONNECTED mode. For example, if the reception quality is below Th_sdt, but above Th_connect, the UE may remain in RRC_INACTIVE state, and send QoS information to the NE using SDT. If quality/QoS degrades further and reaches below Th_connect, the UE may initiate RRC_CONNECTED state using *RRCResumeRequest.* Whenever the UE determines that reception quality is below Th_sdt, instead of directly switching to RRC_CONNECTED state, the UE may send SDT data/signal to the NE, and indicate its QoS state/value.

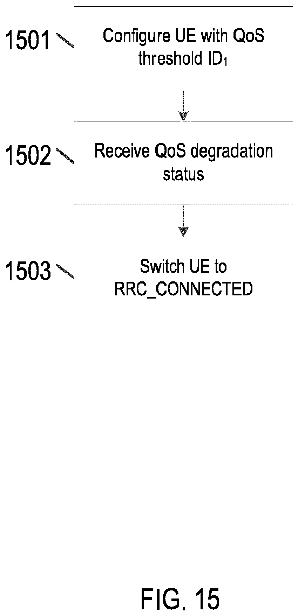

FIG. 15 illustrates an example of a flow diagram of a method that may be performed by a NE, such as NE 1610 illustrated in FIG. 16, according to various example embodiments. Depending on specific threshold values that a UE, such as UE 1620 illustrated in FIG. 16, is monitoring, the UE may either use SDT or switch to CONNECTED mode to inform the NE about degraded reception quality. The NE and UE may both be configured to support SDT.

At 1501, the method may include configuring the UE with a QoS threshold (*e.g.,* ID₁).

At 1502, the method may include receiving a QoS degradation status *(e.g.,* QoS value) using UL SDT data/signal, which may indicate the degrading quality of MBS reception. As an example, the UE may follow the SDT set-up procedure with the NE using either RACH (configured via system information) or over Type 1 CG resources (configured via dedicated signalling in *RRCRelease).*

At 1503, the method may include taking appropriate measures (e.g., set a more conservative MCS or increase the power for the transmission), and/or switching the UE to RRC_CONNECTED state to improve UE QoS.

In certain example embodiments, the UE may also define multiple threshold levels so that depending on the threshold value, the UE may decide to either send SDT or go to RRC_CONNECTED mode. For example, if the reception quality is below Th_sdt, but above Th_connect, the UE may remain in RRC_INACTIVE state, and send QoS information to the NE using SDT. If quality/QoS degrades further and reaches below Th_connect, the UE may initiate RRC_CONNECTED state using *RRCResumeRequest.* Whenever the UE determines that reception quality is below a threshold, instead of directly switching to RRC_CONNECTED state, the UE may send SDT data/signal to the NE, and indicate its QoS state/value.

FIG. 16 illustrates an example of a system according to certain example embodiments. In one example embodiment, a system may include multiple devices, such as, for example, NE 1610 and/or UE 1620.

NE 1610 may be one or more of a base station *(e.g.,* 3G UMTS NodeB, 4G LTE Evolved NodeB, or 5G NR Next Generation NodeB), a serving gateway, a server, and/or any other access node or combination thereof.

NE 1610 may further comprise at least one gNB-centralized unit (CU), which may be associated with at least one gNB-distributed unit (DU). The at least one gNB-CU and the at least one gNB-DU may be in communication via at least one F1 interface, at least one Xₙ-C interface, and/or at least one NG interface via a 5^{th} generation core (5GC).

UE 1620 may include one or more of a mobile device, such as a mobile phone, smart phone, personal digital assistant (PDA), tablet, or portable media player, digital camera, pocket video camera, video game console, navigation unit, such as a global positioning system (GPS) device, desktop or laptop computer, single-location device, such as a sensor or smart meter, or any combination thereof. Furthermore, NE 1610 and/or UE 1620 may be one or more of a citizens broadband radio service device (CBSD).

NE 1610 and/or UE 1620 may include at least one processor, respectively indicated as 1611 and 1621. Processors 1611 and 1621 may be embodied by any computational or data processing device, such as a central processing unit (CPU), application specific integrated circuit (ASIC), or comparable device. The processors may be implemented as a single controller, or a plurality of controllers or processors.

At least one memory may be provided in one or more of the devices, as indicated at 1612 and 1622. The memory may be fixed or removable. The memory may include computer program instructions or computer code contained therein. Memories 1612 and 1622 may independently be any suitable storage device, such as a non-transitory computer-readable medium. The term "non-transitory," as used herein, may correspond to a limitation of the medium itself (*i.e.,* tangible, not a signal) as opposed to a limitation on data storage persistency (e.g., random access memory (RAM) vs. read-only memory (ROM)). A hard disk drive (HDD), random access memory (RAM), flash memory, or other suitable memory may be used. The memories may be combined on a single integrated circuit as the processor, or may be separate from the one or more processors. Furthermore, the computer program instructions stored in the memory, and which may be processed by the processors, may be any suitable form of computer program code, for example, a compiled or interpreted computer program written in any suitable programming language.

Processors 1611 and 1621, memories 1612 and 1622, and any subset thereof, may be configured to provide means corresponding to the various blocks of FIGs. 4-15. Although not shown, the devices may also include positioning hardware, such as GPS or micro electrical mechanical system (MEMS) hardware, which may be used to determine a location of the device. Other sensors are also permitted, and may be configured to determine location, elevation, velocity, orientation, and so forth, such as barometers, compasses, and the like.

As shown in FIG. 16, transceivers 1613 and 1623 may be provided, and one or more devices may also include at least one antenna, respectively illustrated as 1614 and 1624. The device may have many antennas, such as an array of antennas configured for multiple input multiple output (MIMO) communications, or multiple antennas for multiple RATs. Other configurations of these devices, for example, may be provided. Transceivers 1613 and 1623 may be a transmitter, a receiver, both a transmitter and a receiver, or a unit or device that may be configured both for transmission and reception.

The memory and the computer program instructions may be configured, with the processor for the particular device, to cause a hardware apparatus, such as UE, to perform any of the processes described above *(i.e.,* FIGs. 4-15). Therefore, in certain example embodiments, a non-transitory computer-readable medium may be encoded with computer instructions that, when executed in hardware, perform a process such as one of the processes described herein. Alternatively, certain example embodiments may be performed entirely in hardware.

**In** certain example embodiments, an apparatus may include circuitry configured to perform any of the processes or functions illustrated in FIGs. 4-15. As used in this application, the term "circuitry" may refer to one or more or all of the following: (a) hardware-only circuit implementations (such as implementations in only analog and/or digital circuitry), (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions), and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

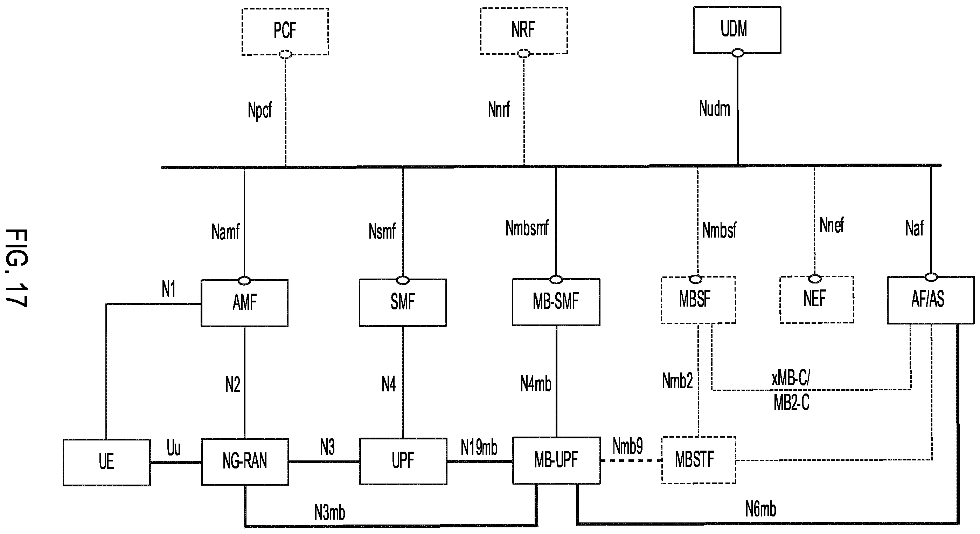

FIG. 17 illustrates an example of a 5G network and system architecture according to certain example embodiments. Shown are multiple network functions that may be implemented as software operating as part of a network device or dedicated hardware, as a network device itself or dedicated hardware, or as a virtual function operating as a network device or dedicated hardware. The NE and UE illustrated in FIG. 17 may be similar to NE 1610 and UE 1620, respectively. The user plane function (UPF) may provide services such as intra-RAT and inter-RAT mobility, routing and forwarding of data packets, inspection of packets, user plane QoS processing, buffering of downlink packets, and/or triggering of downlink data notifications. The application function (AF) may primarily interface with the core network to facilitate application usage of traffic routing and interact with the policy framework.

According to certain example embodiments, processors 1611 and 1621, and memories 1612 and 1622, may be included in or may form a part of processing circuitry or control circuitry. In addition, in some example embodiments, transceivers 1613 and 1623 may be included in or may form a part of transceiving circuitry.

In some example embodiments, an apparatus *(e.g.,* NE 1610 and/or UE 1620) may include means for performing a method, a process, or any of the variants discussed herein. Examples of the means may include one or more processors, memory, controllers, transmitters, receivers, and/or computer program code for causing the performance of the operations.

In various example embodiments, apparatus 1610 may be controlled by memory 1612 and processor 1611 to transmit, to a user equipment, more than one quality of service threshold configuration each comprising at least one quality of service threshold. Each of the quality of service threshold configuration may be associated with a quality of service threshold configuration identifier.

Certain example embodiments may be directed to an apparatus that includes means for performing any of the methods described herein including, for example, means for transmitting, to a user equipment, more than one quality of service threshold configuration each comprising at least one quality of service threshold. Each of the quality of service threshold configurations may be associated with a quality of service threshold configuration identifier.

In various example embodiments, apparatus 1610 may be controlled by memory 1612 and processor 1611 to receive, from a network entity, more than one quality of service threshold configuration each comprising at least one quality of service threshold; receive, from the network entity, one of the quality of service threshold configuration identifiers; measure a quality of service for each of the quality of service thresholds of the quality of service threshold configuration associated with the received quality of service threshold configuration identifier; and determine a radio resource control state based upon a comparison of the measured quality of service being above or below a respective quality of service threshold of each of the quality of service thresholds of the quality of service threshold configuration associated with the received quality of service threshold configuration identifier. Each of the quality of service threshold configurations may be associated with a quality of service threshold configuration identifier.

Certain example embodiments may be directed to an apparatus that includes means for performing any of the methods described herein including, for example, means for receiving, from a network entity, more than one quality of service threshold configuration each comprising at least one quality of service threshold; means for receiving, from the network entity, one of the quality of service threshold configuration identifiers; means for measuring a quality of service for each of the quality of service thresholds of the quality of service threshold configuration associated with the received quality of service threshold configuration identifier; and determining a radio resource control state based upon a comparison of the measured quality of service being above or below a respective quality of service threshold of each of the quality of service thresholds of the quality of service threshold configuration associated with the received quality of service threshold configuration identifier. Each of the quality of service threshold configurations may be associated with a quality of service threshold configuration identifier.

The features, structures, or characteristics of example embodiments described throughout this specification may be combined in any suitable manner in one or more example embodiments. For example, the usage of the phrases "various embodiments," "certain embodiments," "some embodiments," or other similar language throughout this specification refers to the fact that a particular feature, structure, or characteristic described in connection with an example embodiment may be included in at least one example embodiment. Thus, appearances of the phrases "in various embodiments," "in certain embodiments," "in some embodiments," or other similar language throughout this specification does not necessarily all refer to the same group of example embodiments, and the described features, structures, or characteristics may be combined in any suitable manner in one or more example embodiments.

As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

Additionally, if desired, the different functions or procedures discussed above may be performed in a different order and/or concurrently with each other. Furthermore, if desired, one or more of the described functions or procedures may be optional or may be combined. As such, the description above should be considered as illustrative of the principles and teachings of certain example embodiments, and not in limitation thereof.

One having ordinary skill in the art will readily understand that the example embodiments discussed above may be practiced with procedures in a different order, and/or with hardware elements in configurations which are different than those which are disclosed..

### Partial Glossary

- 3GPP: 3^{rd} Generation Partnership Project
- 5G: 5^{th} Generation
- 5GC: 5^{th} Generation Core
- 5GS: 5^{th} Generation System
- 6G: 6^{th} Generation
- AF: Application Function
- ASIC: Application Specific Integrated Circuit
- BLER: Block Error Rate
- BS: Base Station
- CBSD: Citizens Broadband Radio Service Device
- CG: Configured Grant
- CN: Core Network
- CPU: Central Processing Unit
- CU: Centralized Unit
- DL: Downlink
- DU: Distributed Unit
- eMBB: Enhanced Mobile Broadband
- eNB: Evolved Node B
- gNB: Next Generation Node B
- GPS: Global Positioning System
- HARQ: Hybrid Automatic Repeat Request
- HDD: Hard Disk Drive
- ID: Identifier
- IoT: Internet of Things
- L1: Layer 1
- L2: Layer 2
- LTE: Long-Term Evolution
- LTE-A: Long-Term Evolution Advanced
- MAC: Medium Access Control
- MBS: Multicast and Broadcast Service
- MC: Multicast
- MCCH: Multicast and Broadcast Service Control Channel
- MCH: Multicast Channel
- MCS: Modulation and Coding Scheme
- MEMS: Micro Electrical Mechanical System
- MIMO: Multiple Input Multiple Output
- mMTC: Massive Machine Type Communication
- MTCH: Multicast and Broadcast Service Transport Channel
- NE: Network Entity
- NG: Next Generation
- NG-eNB: Next Generation Evolved Node B
- NG-RAN: Next Generation Radio Access Network
- NR: New Radio
- NWDAF: Network Data Analytics Function
- PDA: Personal Digital Assistance
- PDCCH: Physical Downlink Control Channel
- PDSCH: Physical Downlink Shared Channel
- PDU: Protocol Data Unit
- PRACH: Physical Random Access Channel
- PTM: Point-to-Multipoint
- PTP: Point-to-Point
- PUCCH: Physical Uplink Control Channel
- QoE: Quality of Experience
- QoS: Quality of Service
- RACH: Random Access Channel
- RAM: Random Access Memory
- RAN: Radio Access Network
- RAT: Radio Access Technology
- RF: Radio Frequency
- RNA: Radio Access Network Notification Area
- RO: Random Access Channel Occasion
- ROM: Read-Only Memory
- RRC: Radio Resource Control
- RSRP: Reference Signal Received Power
- SDAP: Service Data Adaption Protocol
- SDT: Small Data Transmission
- SIB: System Information Block
- SON: Self-Organizing Network
- TH: Threshold
- TR: Technical Report
- TS: Technical Specification
- UE: User Equipment
- UL: Uplink
- UMTS: Universal Mobile Telecommunications System
- UPF: User Plane Function
- URLLC: Ultra-Reliable and Low-Latency Communication
- UTRAN: Universal Mobile Telecommunications System Terrestrial Radio Access Network
- WID: Work Item Description

## Claims

1. An apparatus, comprising:
means for transmitting (901, 1101, 1301), to a user equipment, more than one quality of service threshold configuration each comprising at least one quality of service threshold in order to configure the user equipment with multiple levels of quality of service thresholds, wherein each of the quality of service threshold configurations are associated with a quality of service threshold configuration identifier.

2. The apparatus of claim 1, further comprising:
means for selecting a first quality of service threshold configuration from among the quality of service threshold configurations; and
means for transmitting, to the user equipment, the quality of service threshold configuration identifier associated with the first quality of service threshold configuration via broadcast system information block or multicast control channel.

3. The apparatus of claim 1 or 2, wherein each quality of service threshold configuration comprises at least one quality of service parameters set, and wherein each quality of service parameters set comprises more than one quality of service parameter.

4. The apparatus of any of claims 1-3, further comprising:
means for selecting a time window where at least one of the quality of service threshold configurations is applicable; and
means for transmitting the selected time window to the user equipment.

5. The apparatus of any of claims 1-4, further comprises:
means for receiving, from the user equipment, a quality of service degradation status using uplink small data transmission.

6. An apparatus, comprising:
means for receiving (801, 1001, 1201), from a network entity, more than one quality of service threshold configuration each comprising at least one quality of service threshold, wherein the more than one quality of service threshold configuration configures the apparatus with multiple levels of quality of service thresholds, and wherein each of the quality of service threshold configurations are associated with a quality of service threshold configuration identifier.

7. The apparatus of claim 6, further comprising:
means for receiving, from the network entity, one of the quality of service threshold configuration identifiers;
means for measuring a quality of service; and
means for determining a radio resource control state based upon a comparison of the measured quality of service being above or below a respective quality of service threshold associated with the received quality of service threshold configuration identifier.

8. The apparatus of claim 6 or 7, wherein each quality of service threshold configuration comprises at least one quality of service parameters set, and wherein each quality of service parameters set comprises more than one quality of service parameter.

9. The apparatus of claim 7 or 8, wherein the means for determining a radio resource control state based upon a comparison comprise at least one of:
means for determining that the measured quality of service is above the quality of service threshold level for at least one of the quality of service thresholds in the identified quality of service threshold configuration and means for remaining in a radio resource control inactive state; or
means for determining that at least one of the measured quality of services are below the quality of service threshold level of the quality of service thresholds in the identified quality of service threshold configuration and means for sending a request to transition to a radio resource control connected state.

10. The apparatus of any of claims 6-9, wherein the quality of service threshold configuration identifier is received via broadcast system information block or multicast control channel.

11. The apparatus of any of claims 6-10, further comprising:
means for receiving, from a network entity, a time window associated with the at least one of the quality of service threshold configurations;
means for determining if current time matches the received time window; and
means for determining performing the measuring when the current time matches the received time window.

12. The apparatus of any of claims 6-11, further comprising:
means for receiving, from the network entity, a priority value associated with each quality of service threshold configuration identifier;
means for receiving, from the network entity, a priority value via system information block or multicast control channel; and
means for determining whether to measure a quality of service associated with a corresponding quality of service threshold configuration when the priority threshold received for the quality of service threshold configuration is above the received priority value.

13. The apparatus of any of claims 6-12, further comprising:
means for transmitting, to the network entity, a quality of service degradation status using an uplink small data transmission procedure.

14. A method comprising:
transmitting (901, 1101, 1301), to a user equipment, more than one quality of service threshold configuration each comprising at least one quality of service threshold in order to configure the user equipment with multiple levels of quality of service thresholds, wherein each of the quality of service threshold configurations are associated with a quality of service threshold configuration identifier.

15. A method comprising:
receiving (801, 1001, 1201), from a network entity, more than one quality of service threshold configuration each comprising at least one quality of service threshold, wherein the more than one quality of service threshold configuration configures a multi-level configuration having multiple levels of quality of service thresholds, and wherein each of the quality of service threshold configurations are associated with a quality of service threshold configuration identifier.

## Patentansprüche

1. Vorrichtung, die Folgendes umfasst:
Mittel zum Übertragen (901, 1101, 1301) von mehr als einer Dienstqualitätsschwellwertauslegung, von denen jede mindestens einen Dienstsqualitätsschwellwert umfasst, zu einer Teilnehmereinrichtung, um die Teilnehmereinrichtung mit mehreren Maßen von Dienstqualitätsschwellwerten auszulegen, wobei jede der Dienstqualitätsschwellwertauslegungen mit einer Dienstqualitätsschwellwertauslegungskennung verknüpft ist.

2. Vorrichtung nach Anspruch 1, die ferner Folgendes umfasst:
Mittel zum Auswählen einer ersten Dienstqualitätsschwellwertauslegung der Dienstqualitätsschwellwertauslegungen; und
Mittel zum Übertragen der Dienstqualitätsschwellwertauslegungskennung, die mit der ersten Dienstqualitätsschwellwertauslegung verknüpft ist, via einen Broadcastsysteminformationsblock oder einen Multicaststeuerkanal zur Teilnehmereinrichtung.

3. Vorrichtung nach Anspruch 1 oder 2, wobei jede Dienstqualitätsschwellwertauslegung mindestens einen Dienstqualitätsparametersatz umfasst, und wobei jeder Dienstqualitätsparametersatz mehr als einen Dienstqualitätsparameter umfasst.

4. Vorrichtung nach einem der Ansprüche 1 bis 3, die ferner Folgendes umfasst:
Mittel zum Auswählen eines Zeitfensters, in dem mindestens eine der Dienstqualitätsschwellwertauslegungen gültig ist; und
Mittel zum Übertragen des ausgewählten Zeitfensters zur Teilnehmereinrichtung.

5. Vorrichtung nach einem der Ansprüche 1 bis 4, die ferner Folgendes umfasst:
Mittel zum Empfangen eines Dienstqualitätsverschlechterungsstatus unter Verwendung einer Kleindatenuplinkübertragung von der Teilnehmereinrichtung.

6. Vorrichtung, die Folgendes umfasst:
Mittel zum Empfangen (801, 1001, 1201) von mehr als einer Dienstqualitätsschwellwertauslegung, von denen jede mindestens einen Dienstsqualitätsschwellwert umfasst, von einer Netzwerkentität, wobei die mehr als eine Dienstqualitätsschwellwertauslegung die Vorrichtung mit mehreren Maßen von Dienstqualitätsschwellwerten auslegt, und wobei jede der Dienstqualitätsschwellwertauslegungen mit einer Dienstqualitätsschwellwertauslegungskennung verknüpft ist.

7. Vorrichtung nach Anspruch 6, die ferner Folgendes umfasst:
Mittel zum Empfangen einer der Dienstqualitätsschwellwertauslegungskennungen von der Netzwerkentität;
Mittel zum Messen einer Dienstqualität; und
Mittel zum Bestimmen eines Funkressourcensteuerzustands darauf basierend, dass ein Vergleich einer gemessenen Dienstqualität über oder unter einem jeweiligen Dienstsqualitätsschwellwert liegt, der mit der empfangenen Dienstqualitätsschwellwertauslegungskennung verknüpft ist.

8. Vorrichtung nach Anspruch 6 oder 7, wobei jede Dienstqualitätsschwellwertauslegung mindestens einen Dienstqualitätsparametersatz umfasst, und wobei jeder Dienstqualitätsparametersatz mehr als einen Dienstqualitätsparameter umfasst.

9. Vorrichtung nach Anspruch 7 oder 8, wobei die Mittel zum Bestimmen eines Funkressourcensteuerzustands auf Basis eines Vergleichs mindestens eines von Folgendem umfassen:
Mittel zum Bestimmen, dass die gemessene Dienstqualität für mindestens einen der Dienstqualitätsschwellwerte in der identifizierten Dienstqualitätsschwellwertauslegung über dem Dienstqualitätsschwellwertmaß liegt, und Mittel zum Beibehalten des inaktiven Funkressourcensteuerzustands; oder
Mittel zum Bestimmen, dass mindestens eine der gemessenen Dienstqualitäten unter dem Dienstqualitätsschwellwertmaß der Dienstqualitätsschwellwerte in der identifizierten Dienstqualitätsschwellwertauslegung liegt, und Mittel zum Senden einer Anforderung zum Übergang zu einem verbundenen Funkressourcensteuerzustand.

10. Vorrichtung nach einem der Ansprüche 6 bis 9, wobei die Dienstqualitätsschwellwertauslegungskennung via einen Broadcastsysteminformationsblock oder einen Multicaststeuerkanal empfangen wird.

11. Vorrichtung nach einem der Ansprüche 6 bis 10, die ferner Folgendes umfasst:
Mittel zum Empfangen eines Zeitfensters, das mit der mindestens einen der Dienstqualitätsschwellwertauslegungen verknüpft ist, von einer Netzwerkentität;
Mittel zum Bestimmen, ob eine aktuelle Zeit mit dem empfangenen Zeitfenster übereinstimmt; und
Mittel zum Bestimmen, die Messung durchzuführen, wenn die aktuelle Zeit mit dem empfangenen Zeitfenster übereinstimmt.

12. Vorrichtung nach einem der Ansprüche 6 bis 11, die ferner Folgendes umfasst:
Mittel zum Empfangen eines Prioritätswertes, der mit jeder Dienstqualitätsschwellwertauslegungskennung verknüpft ist, von der Netzwerkentität;
Mittel zum Empfangen eines Prioritätswertes via einen Systeminformationsblock oder einen Multicaststeuerkanal von der Netzwerkentität, und
Mittel zum Bestimmen, ob eine Dienstqualität zu messen ist, die mit einer entsprechenden Dienstqualitätsschwellwertauslegung verknüpft ist, wenn der empfangene Prioritätsschwellwert für die Dienstqualitätsschwellwertauslegung über dem empfangenen Prioritätswert liegt.

13. Vorrichtung nach einem der Ansprüche 6 bis 12, die ferner Folgendes umfasst:
Mittel zum Übertragen eines Dienstqualitätsverschlechterungsstatus unter Verwendung einer Kleindatenuplinkübertragungsprozedur zur Netzwerkentität.

14. Verfahren, das Folgendes umfasst:
Übertragen (901, 1101, 1301) von mehr als einer Dienstqualitätsschwellwertauslegung, von denen jede mindestens einen Dienstsqualitätsschwellwert umfasst, zu einer Teilnehmereinrichtung, um die Teilnehmereinrichtung mit mehreren Maßen von Dienstqualitätsschwellwerten auszulegen, wobei jede der Dienstqualitätsschwellwertauslegungen mit einer Dienstqualitätsschwellwertauslegungskennung verknüpft sind.

15. Verfahren, das Folgendes umfasst:
Empfangen (801, 1001, 1201) von mehr als einer Dienstqualitätsschwellwertauslegung, von denen jede mindestens einen Dienstsqualitätsschwellwert umfasst, von einer Netzwerkentität, wobei die mehr als eine Dienstqualitätsschwellwertauslegung eine mehrere Maße umfassende Auslegung mit mehreren Maßen von Dienstqualitätsschwellwerten auslegt, und wobei jede der Dienstqualitätsschwellwertauslegungen mit einer Dienstqualitätsschwellwertauslegungskennung verknüpft ist.

## Revendications

1. Appareil comprenant :
des moyens pour transmettre (901, 1101, 1301) à un équipement utilisateur plusieurs configurations de seuils de qualité de service comprenant chacune au moins un seuil de qualité de service afin de configurer l'équipement utilisateur avec de multiples niveaux de seuils de qualité de service, dans lequel chacune des configurations de seuils de qualité de service est associée à un identifiant de configuration de seuils de qualité de service.

2. Appareil selon la revendication 1, comprenant en outre :
des moyens pour sélectionner une première configuration de seuils de qualité de service dans les configurations de seuils de qualité de service ; et
des moyens pour transmettre à l'équipement utilisateur l'identifiant de configuration de seuils de qualité de service associé à la première configuration de seuils de qualité de service via un bloc d'informations système de diffusion ou un canal de contrôle de multidiffusion.

3. Appareil selon la revendication 1 ou 2, dans lequel chaque configuration de seuils de qualité de service comprend au moins un ensemble de paramètres de qualité de service, et dans lequel chaque ensemble de paramètres de qualité de service comprend plusieurs paramètres de qualité de service.

4. Appareil selon l'une des revendications 1 à 3, comprenant en outre :
des moyens pour sélectionner une fenêtre temporelle où au moins une des configurations de seuils de qualité de service est applicable ; et
des moyens pour transmettre la fenêtre temporelle sélectionnée à l'équipement utilisateur.

5. Appareil selon l'une des revendications 1 à 4, comprenant en outre :
des moyens pour recevoir de l'équipement utilisateur un statut de dégradation de qualité de service à l'aide d'une transmission de petites données de liaison montante.

6. Appareil comprenant :
des moyens pour recevoir (801, 1001, 1201) d'une entité de réseau plusieurs configurations de seuils de qualité de service comprenant chacune au moins un seuil de qualité de service, dans lequel lesdites plusieurs configurations de seuils de qualité de service configurent l'appareil avec de multiples niveaux de seuils de qualité de service, et dans lequel chacune des configurations de seuils de qualité de service est associée à un identifiant de configuration de seuils de qualité de service.

7. Appareil selon la revendication 6, comprenant en outre :
des moyens pour recevoir de l'entité de réseau un des identifiants de configuration de seuils de qualité de service ;
des moyens pour mesurer une qualité de service ; et
des moyens pour déterminer un état de contrôle de ressources radio sur la base d'une comparaison indiquant que la qualité de service mesurée est supérieure ou inférieure à un seuil de qualité de service respectif associé à l'identifiant de configuration de seuils de qualité de service reçu.

8. Appareil selon la revendication 6 ou 7, dans lequel chaque configuration de seuils de qualité de service comprend au moins un ensemble de paramètres de qualité de service, et dans lequel chaque ensemble de paramètres de qualité de service comprend plusieurs paramètres de qualité de service.

9. Appareil selon la revendication 7 ou 8, dans lequel les moyens pour déterminer un état de contrôle de ressources radio sur la base d'une comparaison comprennent au moins des moyens parmi :
des moyens pour déterminer que la qualité de service mesurée est supérieure au niveau de seuil de qualité de service pour au moins un des seuils de qualité de service dans la configuration de seuil de qualité de service identifiée, et des moyens pour rester dans un état inactif de contrôle de ressources radio ; ou
des moyens pour déterminer qu'au moins une des qualités de service mesurées est inférieure au niveau de seuil de qualité de service des seuils de qualité de service dans la configuration de seuil de qualité de service identifiée, et des moyens pour envoyer une demande de transition à un état connecté de contrôle de ressources radio.

10. Appareil selon l'une des revendications 6 à 9, dans lequel l'identifiant de configuration de seuils de qualité de service est reçu via un bloc d'informations système de diffusion ou un canal de contrôle de multidiffusion.

11. Appareil selon l'une des revendications 6 à 10, comprenant en outre :
des moyens pour recevoir d'une entité de réseau une fenêtre temporelle associée à l'au moins une des configurations de seuils de qualité de service ;
des moyens pour déterminer si l'heure actuelle concorde avec la fenêtre temporelle reçue ; et
des moyens pour déterminer la réalisation de la mesure lorsque l'heure actuelle concorde avec la fenêtre temporelle reçue.

12. Appareil selon l'une des revendications 6 à 11, comprenant en outre :
des moyens pour recevoir de l'entité de réseau une valeur de priorité associée à chaque identifiant de configuration de seuils de qualité de service ;
des moyens pour recevoir de l'entité de réseau une valeur de priorité via un bloc d'informations système ou un canal de contrôle de multidiffusion ; et
des moyens pour déterminer s'il faut mesurer une qualité de service associée à une configuration de seuils de qualité de service correspondante lorsque le seuil de priorité reçu pour la configuration de seuils de qualité de service est supérieur à la valeur de priorité reçue.

13. Appareil selon l'une des revendications 6 à 12, comprenant en outre :
des moyens pour transmettre à l'entité de réseau un statut de dégradation de qualité de service à l'aide d'une procédure de transmission de petites données de liaison montante.

14. Procédé comprenant :
la transmission (901, 1101, 1301), à un équipement utilisateur, de plusieurs configurations de seuils de qualité de service comprenant chacune au moins un seuil de qualité de service afin de configurer l'équipement utilisateur avec de multiples niveaux de seuils de qualité de service, dans lequel chacune des configurations de seuils de qualité de service est associée à un identifiant de configuration de seuils de qualité de service.

15. Procédé comprenant :
la réception (801, 1001, 1201), d'une entité de réseau, de plusieurs configurations de seuils de qualité de service comprenant chacune au moins un seuil de qualité de service, dans lequel les plusieurs configurations de seuils de qualité de service configurent une configuration multiniveau ayant de multiples niveaux de seuils de qualité de service, et dans lequel chacune des configurations de seuils de qualité de service est associée à un identifiant de configuration de seuils de qualité de service.
